(19) Europäisches Patentamt
European Patent Office
Office européen des brevets

(11) **EP 4 083 857 A1**

(12) **EUROPEAN PATENT APPLICATION**
published in accordance with Art. 153(4) EPC

(43) Date of publication:
**02.11.2022 Bulletin 2022/44**

(51) International Patent Classification (IPC):
***G06K 9/62*** (2022.01)

(21) Application number: **20908334.4**

(86) International application number:
**PCT/CN2020/120580**

(22) Date of filing: **13.10.2020**

(87) International publication number:
**WO 2021/129055 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.12.2019 CN 201911360658**

(71) Applicant: **BIGO TECHNOLOGY PTE. LTD.**
**Singapore 117440 (SG)**

(72) Inventors:
• **YANG, Wanpeng**
**Guangzhou, Guangdong 511402 (CN)**
• **TAN, Nutao**
**Guangzhou, Guangdong 511402 (CN)**

(74) Representative: **Yang, Shu**
**Withers & Rogers LLP**
**2 London Bridge**
**London SE1 9RA (GB)**

(54) **INFORMATION PREDICTION MODEL TRAINING METHOD AND APPARATUS, INFORMATION PREDICTION METHOD AND APPARATUS, STORAGE MEDIUM, AND DEVICE**

(57) A model training method, an information prediction method and apparatus, a storage medium, and a device. The model training method comprises: acquiring a training sample set corresponding to a current training period, a training sample in the training sample set comprising a feature item, a feature attribute value corresponding to the feature item, and behavior data of a user for an information entry, and the feature item comprising at least one among a user feature and an information entry feature (101); collecting statistics on the behavior data in the training sample set, obtaining current behavior statistics data, and updating first behavior statistics data in a first information prediction model by using the current behavior statistics data to obtain a second information prediction model, wherein the first information prediction model corresponds to a previous training period (102); and raining the second information prediction model by using the training sample set to obtain a trained third information prediction model (103).

FIG. 1

**Description**

**CROSS-REFERENCE TO RELATED APPLICATION**

This application claims priority to the Chinese patent application No. 201911360658.2, filed on December 25, 2019, the content of which is herein incorporated by reference in its entirety.

**TECHNICAL FIELD**

The present disclosure relates to the field of computer technologies, and in particular, relates to a method and apparatus for training information prediction models, a method and apparatus for predicting information, and a storage medium and a device thereof.

**BACKGROUND**

With the rapid development of the Internet technologies, it is difficult for a user to acquire efficient content of interest due to explosively increased information. The personalized recommendation technologies have become indispensable in the Internet technologies, and become increasingly important in the information products involved in news, short videos, music, and the like.

Generally, a system for recommending information performs statistical collection and updates continuous features (such as, a click, like, share, and the like) of the user by a streaming statistical task (such as, spark streaming, flink, or the like). The behavior feature data is stored in a distributed storage system (such as, a remote dictionary server, Redis). In the case that the on-line recommendation needs to be performed, the behavior feature needs to be read from the storage system by the streaming statistical task, and the behavior feature extraction and behavior feature statistical collection are performed. Then, the behavior feature and current samples are input into a pre-trained information prediction model to predict the information, and the information is recommended based on a prediction result. However, the accuracy of the information prediction model is not great, and the information prediction model needs to be improved.

**SUMMARY**

The present disclosure provides a method and apparatus for training information prediction models, a method and apparatus for predicting information, and a storage medium and a device thereof, which may optimize a scheme for training the information prediction model.

A method for training information prediction models is provided. The method includes:

acquiring a set of training samples corresponding to a current training period, wherein training samples in the set of training samples include feature items, feature attribute values corresponding to the feature items, and behavior data of a user for information items, the feature items including features of the user and/or features of the information items;

acquiring current behavior statistics data by performing statistical collection on the behavior data in the set of training samples, and acquiring a second information prediction model by updating, based on the current behavior statistics data, first behavior statistics data in a first information prediction model, wherein the first information prediction model corresponds to a previous training period; and

acquiring a trained third information prediction model by training the second information prediction model based on the set of training samples.

A method for predicting information is further provided. The method includes:

acquiring samples corresponding to candidate information items;

acquiring an information prediction model, wherein the information prediction model is acquired by the above method for training information prediction models; and

inputting the samples into the information prediction model, and determining, based on an output result of the information prediction model, a prediction result corresponding to the candidate information items.

An apparatus for training information prediction models is further provided. The apparatus includes:

a training sample acquiring module, configured to acquire a set of training samples corresponding to a current training period, wherein training samples in the set of training samples include feature items, feature attribute values corresponding to the feature items, and behavior data of a user for information items, the feature items including features of the user and/or features of the information items;

a behavior statistics data updating module, configured to acquire current behavior statistics data by performing statistical collection on the behavior data in the set of training samples, and acquire a second information prediction model by updating, based on the current behavior statistics data, first behavior statistics data in a first information prediction model, wherein the first information prediction model corresponds to a previous training period; and

a model training module, configured to acquire a trained third information prediction model by training the second information prediction model based on the set of training samples.

An apparatus for predicting information is further provided. The apparatus includes:

a sample acquiring module, configured to acquire samples corresponding to candidate information items;

a model acquiring module, configured to acquire an information prediction model, wherein the information prediction model is acquired by the above method for training information prediction models; and

a predicting module, configured to input the samples into the information prediction model, and determine, based on an output result of the information prediction model, a prediction result corresponding to the candidate information items.

A computer-readable storage medium is further provided. The computer-readable storage medium stores a computer program, wherein the computer program, when run by a processor, causes the processor to perform the above methods.

A computer device is further provided. The computer device includes: a memory, a processor, and a computer program that is stored in the memory and runnable in the processor, wherein the processor, when running the computer program, is caused to perform the above methods.

## BRIEF DESCRIPTION OF THE DRAWINGS

FIG. 1 is a flowchart of a method for training information prediction models according to an embodiment of the present disclosure;

FIG. 2 is a flowchart of another method for training information prediction models according to an embodiment of the present disclosure;

FIG. 3 is a schematic structural diagram of an information prediction model according to an embodiment of the present disclosure;

FIG. 4 is a flowchart of a method for predicting information according to an embodiment of the present disclosure;

FIG. 5 is a block diagram of a structure of an apparatus for training information prediction models according to an embodiment of the present disclosure;

FIG. 6 is a block diagram of a structure of apparatus for predicting information according to an embodiment of the present disclosure; and

FIG. 7 is a block diagram of a structure of a computer device according to an embodiment of the present disclosure.

## DETAILED DESCRIPTION

The present disclosure is described hereinafter with reference to the accompanying drawings and the embodiments.

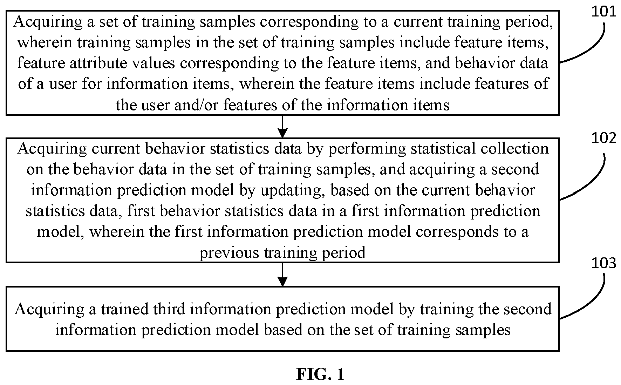

FIG. 1 is a flowchart of a method for training information prediction models according to an embodiment of the present disclosure. The method is applicable to an apparatus for training information prediction models. The apparatus may be implemented by a software and/or a hardware, and may be integrated in a computer device. As shown in FIG. 1, the method includes the following processes.

In S101, a set of training samples corresponding to a current training period is acquired, wherein training samples in the set of training samples include feature items, feature attribute values corresponding to the feature items, and behavior data of a user for information items, wherein the feature items include features of the user and/or features of the information items.

The information prediction model according to the embodiments of the present disclosure is applicable to various recommendation scenarios, such as news recommendation, information recommendation, article recommendation, music recommendation, and short video recommendation. The information item may be in the form of displaying or exposing information (such as news, information, articles, music, and short videos). For example, the information item may be in the form of a title, a name, an icon, a live, a display interface, or the like. The information item may be exposed by an application to which the information item belongs (hereinafter referred to as a predetermined application). For example, the short video is exposed by a corresponding short video application, and the exposing form may be a corresponding print screen of the short video or a displaying interface of the short video.

In the embodiments of the present disclosure, the information prediction model may be trained periodically, and a training period may be set as required. The training period may be measured according to time, for example, one hour is a training period. The training period may be also measured according to the number of samples, for example, one batch is a training period, and one batch includes, for example, 1024 samples. Optionally, the behavior data of a predetermined user group for information items in a predetermined set of the information items may be captured, organized as the training samples in the set of training samples, and acquired in training the model. The process may be performed by the predetermined application. The predetermined application may transmit the samples to a corresponding server in real time or on time. The predetermined application may transmit captured original data to a corresponding server. The server performs the process of organizing the training samples. The number of training samples in the set of training samples is not limited in the embodiments of the present disclosure.

Illustratively, the feature items in the training samples may include features of a user, and features of the information items. For example, the features of the user may be some features related to a user attribute, such as, gender, age (or age range), occupation, location, and accumulated age of the use of the predetermined application, and the like. The feature attribute values corresponding to the feature items may be values corresponding to possible scenes of the feature items. For example, the gender includes male and female, and the occupation includes teacher, policeman, worker, and the like. For example, the features of the information items may be some features related to the information items. Taking the short video as an example, the features of the information items may include shooters corresponding to the short video, a type of the short video, a style of the short video, a shooting location of the short video, a total duration of the short video, and the like. The behavior data of the user for the information items may include behavior of the user of the related operation on the information items. Taking the short video as an example, the behavior data may include whether to click, whether to stop playing, whether to like, whether to share, whether to comment, a playing duration, and the like.

In S102, current behavior statistics data is acquired by performing statistical collection on the behavior data in the set of training samples, and a second information prediction model is acquired by updating, based on the current behavior statistics data, first behavior statistics data in a first information prediction model, wherein the first information prediction model corresponds to a previous training period.

Optionally, the first information prediction model may be a machine leaning model, for example, may be an information prediction model based on deep neural networks (DNN). Optionally, the first information prediction model may include an information prediction model based on click through rates (CTR). The click through rate refers to a click through rate of issued items, that is, an actual number of clicks on the items divided by the number of displayed items. The possibility of selecting an information item by the user is estimated based the CTR, and thus the information items of interest are recommended to the user.

Illustratively, statistical collection may be performed on each of feature attribute values present in the set of training samples, and a plurality of groups of feature attribute values (for example, the male and the policeman may be in one group of feature attribute values) may be acquired by combining the feature attribute values. In addition, the statistical collection is performed on each group of feature attribute values.

In the embodiments of the present disclosure, the first information prediction model corresponds to a previous training period. That is, the first information prediction model is an information prediction model acquired by the training method according to the embodiments of the present disclosure in the previous training period. In the case that the current training period is a first training period, a predetermined initialization information prediction model is set as the first information prediction model in the first training period. In the related art, when the information prediction model is used to predict the information, the behavior statistics data, as input data, and current samples are input into the information prediction model. In the embodiments of the present disclosure, the behavior statistics data part is added in the information prediction model. That is, the behavior statistics data, as part of the information prediction model, is periodically updated according to the training period, and is trained in model training process. In this process, the first behavior statistics data in the previous training period is replaced with the current behavior statistics data in the current training period, such that the behavior statistics data in the information prediction model is updated.

In S103, a trained third information prediction model is acquired by training the second information prediction model based on the set of training samples.

Illustratively, the second information prediction model is acquired in the case that the behavior statistics data is updated, and training is performed using training samples based on the second information prediction model, such that the parameters in the model may be trained more accurately. Illustratively, the trained third information prediction model corresponding to the current training period may be acquired by updating the model parameters in the second information prediction model in a gradient back-haul manner.

Illustratively, in the case that the trained third information prediction model is acquired, the third information prediction model may be published to the corresponding server, such that the server may predict information based on a latest information prediction model.

Optionally, the current behavior statistics data and the trained new model parameters may be published to a corresponding server, and the server may update the first information prediction model based on the current behavior statistics data and the trained new model parameters. In this way, a data transmission amount may be reduced.

Optionally, upon completion of the training, a storage device storing the set of training samples may be instructed to delete the set of training samples corresponding to the current training period, so as to save storage space.

In the method for training information prediction models according to the embodiments of the present disclosure, the set of training samples corresponding to the current training period is acquired, wherein the training samples in the set of training samples include the feature items, the feature attribute values corresponding to the feature items, and the behavior data of the user for the information items, wherein the feature items includes the features of the user and/or the features of the information items; the current behavior statistics data is acquired by performing statistical collection on the behavior data in the set of training samples, and the second information prediction model is acquired by updating, based on the current behavior statistics data, the first behavior statistics data in the first information prediction model, wherein the first information prediction model corresponds to the previous training period; and the trained third information prediction model is acquired by training the second information prediction model based on the set of training samples. By the above technical solutions, the statistical collection may be periodically performed on the behavior data based on the set of training samples, and the behavior statistics data is added to the information prediction model corresponding to the previous training period. Then, the information prediction model corresponding to the previous training period may be trained and updated using the set of training samples. That is, the behavior statistics data is used in the process of training the model. Therefore, the parameters in the model may be trained more accurately, and the accuracy of the model may be improved. Furthermore, when the information needs to be predicted, a latest model may be acquired timely to predict the information, such that the accuracy and timeliness of predicting the information are improved.

In some embodiments, acquiring the current behavior statistics data by performing statistical collection on the behavior data in the set of training samples includes: acquiring current behavior statistics amounts corresponding to the feature attribute values by performing statistical collection on the behavior data corresponding to the feature attribute values present in the set of training samples; and acquiring the current behavior statistics data by aggregating the current behavior statistics amounts corresponding to the feature attribute values. In this way, comprehensive statistical collection may be performed on the behavior data.

In some embodiments, performing the statistical collection on the behavior data corresponding to the current feature attribute values present in the set of training samples includes: acquiring first behavior statistics amounts in the first behavior statistics data corresponding to the current feature attribute values present in the set of training samples, and superimposing the behavior data corresponding to the current feature attribute values present in the set of training samples on the first behavior statistics amounts. In this way, the behavior data present in the current training period may be superimposed on the history behavior data, that is, the statistical duration is increased, such that the behavior features may be embodied more comprehensively.

In some embodiments, superimposing the behavior data corresponding to the feature attribute values present in the set of training samples on the first behavior statistics amounts includes: calculating a product of the first behavior statistics amounts and a predetermined time decay factor; and superimposing the behavior data corresponding to the feature attribute values present in the set of training samples on the product. A value of the predetermined time decay factor may range from 0 to 1, and may be set as required, such as 0.9. In this way, the predetermined time decay factor may be used to control a proportion of the history behavior statistics amounts to the current behavior statistics amounts, such that the current behavior statistics amounts may be calculated more reasonably.

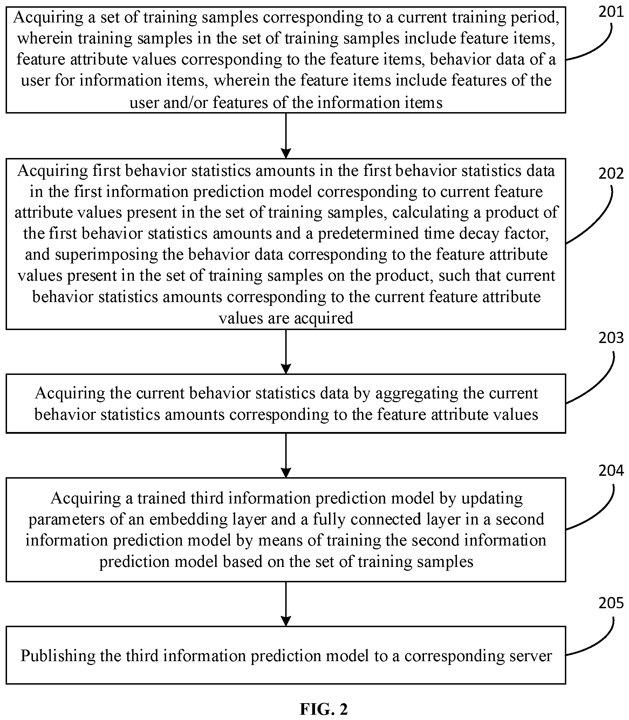

FIG. 2 is a flowchart of another method for training information prediction models according to an embodiment of the present disclosure. The embodiments of the present disclosure are described based on the above optional embodiments.

Illustratively, the first information prediction model includes an embedding layer and a fully connected layer, the fully connected layer receiving the embedding layer and the first behavior statistics data; and acquiring the trained third information prediction model by training the second information prediction model based on the set of training samples includes: acquiring the trained third information prediction model by updating parameters of the embedding layer and the fully connected layer in the second information prediction model by means of training the second information prediction model based on the set of training samples.

Optionally, the method further includes the following processes.

In S201, a set of training samples corresponding to a current training period is acquired, wherein training samples in the set of training samples include feature items, feature attribute values corresponding to the feature items, and behavior data of a user for information items, wherein the feature items include features of the user and features of the information items.

In the embodiments of the present disclosure, the feature items include the features of the user and the features of the information items. In this way, statistical collection may be performed on crossing objects. For example, statistical collection amounts of users of different attributes for one shooter, such as a click amount (or a click rate), a play amount (or a play rate), a complete play amount (or a complete play rate), a like amount (or a like rate), a share amount (or a share rate), a favorite amount (or a favorite rate), a comment amount (or a comment rate), and the like. The statistics amount of the crossing objects is important in the personalized recommendation system, such that the user preferences and interests can be determined more accurately, and an effect of recommending different content for different users can be achieved. In the related art, the behavior feature data is stored in a distributed storage system, and the statistical collection process includes a dotting log analysis, reading the feature from the storage system, a feature calculation, writing new feature into the storage system. A large amount of calculation and input/output (I/O) overhead causes poor stability of the streaming system and consumes a large amount of resources. In addition, all intermediate and final results are stored in the memory or the distributed storage system, and the statistical collection may not be performed on crossing objects due to the limited capacity of the storage system. In the embodiments of the present disclosure, the set of training samples may be acquired periodically, and the statistical collection may be performed on the behavior data timely. The statistical result is directly updated in the model without storing the original data and the intermediate result, such that the requirement for the storage space is lowered efficiently.

Optionally, the feature attribute values may be represented by hash values.

Illustratively, the training samples may be organized in the following format:

slot1@hashval_1_1,hashval_1_2;slot2@hashval_2_1,hashval_2_2;...;slotn@hashval_n_1,h       ashval_n_2 action_tpl@1,0,1,0,1,8 lable:1 weight:1.

slot1, slot2... slotn represent n feature fields, that is, the feature items. The following hash values represent hash values of hashed attribute values of multiple feature fields, and the number of the hash values corresponding to each feature field is not limited. The above example is described by taking two as an example, and the number may further be one or three. Action_tpl represents tuple corresponding to the feedback behavior of the user for exposed information items when the information items are exposed. For example, action tpl may include whether to click, whether to stop playing, whether to like, whether to share, whether to comment, a playing duration, and the like, and is intended to perform a feature statistical collection in the following processes. Taking whether to click as an example, the tuple is marked as "1" in the case that the user clicks the information item, and is marked as "0" in the case that the user does not click the information item. Taking the playing duration as an example, "8" in the above example may represent that the playing duration is 8 minutes. Label may represent a reference numeral of the training sample. Weight may represent a weight corresponding to the current training sample.

In S202, first behavior statistics amounts in the first behavior statistics data in the first information prediction model corresponding to the feature attribute values present in the set of training samples are acquired, a product of the first behavior statistics amounts and a predetermined time decay factor is calculated, and the behavior data corresponding to the feature attribute values present in the set of training samples is superimposed on the product, such that current behavior statistics amounts corresponding to the feature attribute values are acquired.

The first information prediction model corresponds to the previous training period.

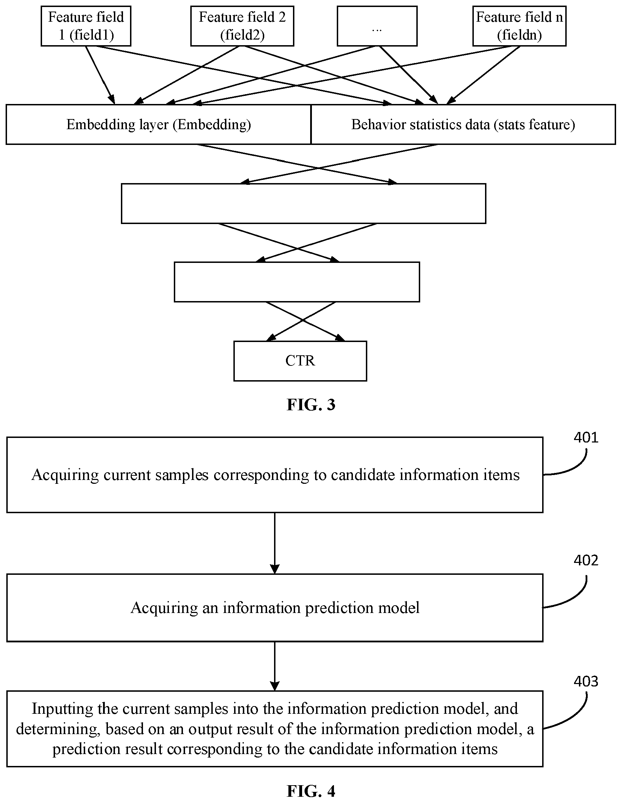

FIG. 3 is a schematic structural diagram of an information prediction model according to an embodiment of the present disclosure. Description is given herein by taking the information prediction model being a DNN information prediction model based on CTR as an example. In FIG. 3, the term "field" represents the feature field, that is, the feature item, the term "embedding" represents the embedding layer, and the term "stats feature" represents the behavior statistics data. The model outputs CTR upon passing through three fully connected layers.

Illustratively, for the hash values present in the set of training samples, the history accumulated behavior statistics amount (stats_feature) is read from the history model (that is, the first information prediction model corresponding to the previous training period, and the history model is not necessary to be loaded in the first training). In the case that the hash value appears at the first time, stats feature is initialized with 0, and is updated by action_tpl in the current set of samples as:

$$\text{stats\_feature} = \text{stats\_feature} * \text{decay\_rate} + \text{action\_tpl}.$$

Decay rate represents a time decay factor. The above equation is described by taking one training sample as an example, and action_tpl in the above equation is a sum of action_tpl in a plurality of training samples in the case that the current hash values appear in the plurality of training samples.

For convenient description, simple examples are given hereinafter. Assuming that the training sample includes three feature items: gender, age range, and type of the short video, then feature attribute values corresponding to the gender include male and female, the age range includes adolescent, youth, middle age, and agedness, and the type of the short video includes A, B, C, and D. The behavior data includes whether to click, whether to stop playing, and whether to like. Assuming that the set of training samples includes three samples:

slot1@male, slot2@adolescent, slot3@A, action_tpl@1,1,0 lable:1 weight:1,
slot1@female, slot2@middle age, slot3@A, action_tpl@1,1,1 lable:1 weight:1, and
slotl@male, slot2@agedness, slot3@A, action_tpl@1,0,0 lable:1 weight:1.

Taking the hash value corresponding to the male as an example, the behavior statistics amount corresponding to the previous training period is read. Assuming that the behavior statistics amount is [100, 30, 20], and the decay is 0.9, then [90, 27, 18] is acquired by multiplying [100, 30, 20] by 0.9. Both the sample 1 and the sample 2 include the "male," and thus the updated current behavior statistics amounts, with corresponding values of action_tpl added, is [90, 27, 18] + [1, 1, 0] + [1, 0, 0] = [91, 28, 18].

In S203, the current behavior statistics data is acquired by aggregating the current behavior statistics amounts corresponding to the feature attribute values.

In S204, the trained third information prediction model is acquired by updating parameters of the embedding layer and the fully connected layer in the second information prediction model by means of training the second information prediction model based on the set of training samples.

Illustratively, as shown in FIG. 3, an implicit vector is acquired in the case that the hash value corresponding to each feature field passes through the embedding layer, and the behavior statistics data (stats feature) corresponding to the hash value is read from the model (that is, the second information prediction model) with the updated statistical features. The implicit vector and the behavior statistics data, upon combination, are input into the fully connected layer, such that a final model CTR is output from the fully connected layer. In the process of training the model, the parameters of the embedding layer and the fully connected layer are updated in the gradient back-haul manner, such that the trained third information prediction model is acquired.

In S205, the third information prediction model is published to a corresponding server.

Illustratively, the trained latest third information prediction model is published to the corresponding server timely, such that the server may predict the information based on the latest information prediction model.

In the method for training the information recommendation models according to the embodiments of the present disclosure, the behavior statistics data is added into the information recommendation model, and is taken, with the implicit vector output by the embedding layer, as an input of the fully connected layer. The behavior statistics data in the model is updated, and training is performed to update the parameters of the embedding layer and the fully connected layer, such that the parameters in the model are trained more accurately, and the accuracy of the model is improved. In addition, the robustness and timeliness of the feature project of the recommending system and processes of training the model are improved, the processes of offline and on-line of the model are simplified, and the iteration efficiency of the model is improved. Furthermore, as the statistical collection may be performed on the behavior data timely, original behavior data and intermediate data are not necessary to be stored, such that the problem of limitation of the storage space is solved efficiently, the statistical collection is performed on crossed features, and the stability of the system is ensured. In the case that the iteration efficiency of the model is improved, where information prediction is needed, the latest model may be acquired timely to predict the information, such that the accuracy and timeliness of predicting the information are improved.

FIG. 4 is a flowchart of a method for predicting information according to an embodiment of the present disclosure. The method is applicable an apparatus for predicting information. The apparatus may be implemented by a software and/or a hardware, and may be integrated in a computer device. As shown in FIG. 4, the method includes the following processes.

In S401, current samples corresponding to candidate information items are acquired.

Illustratively, the candidate information items may be selected based on a setting policy, and the setting policy may be set as required. The elements in the current samples may correspond to the content in the training samples. For example, the current samples include the feature items and the feature attribute values corresponding to the feature items.

In S402, an information prediction model is acquired.

The information prediction model is acquired by the method in the embodiments of the present disclosure. Illustratively, the information prediction model may be acquired from a corresponding on-line server.

In S403, the current samples are input into the information prediction model, and a prediction result corresponding to the candidate information items is determined based on an output result of the information prediction model.

In the method for predicting information, because the information prediction model is acquired by the method for training information prediction models according to the embodiments of the present disclosure, and the information is predicted based on the latest model, the recognition result can be acquired timely and accurately.

In some embodiments, the information prediction model includes the information prediction model based on the click through rates CTR. Determining, based on the output result of the information prediction model, the prediction result corresponding to the candidate information items includes: determining, based on the output result of the information prediction model, a CTR prediction result corresponding to the candidate information items. Upon determining, based on the output result of the information prediction model, the prediction result corresponding to the candidate information items, the method further includes: determining an order of the candidate information items based on the CTR prediction result; and determining, based on the order, an information item to be recommended in the candidate information items. In this way, the CTR corresponding to the plurality of candidate information items may be accurately predicted based on the information prediction model in the embodiments of the present disclosure, and the order is determined based on the CTR to determine the information items to be recommended reasonably. That is, ranking of the top k pieces of data in the recommendation system is achieved.

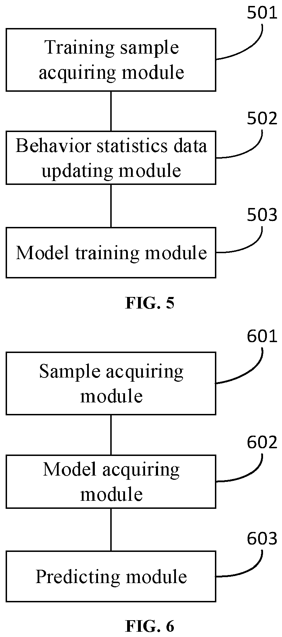

FIG. 5 is a block diagram of a structure of an apparatus for training information prediction models according to an embodiment of the present disclosure. The apparatus may be implemented by a software and/or a hardware, may be integrated in a computer device, and may be trained by the method for training information prediction models. As shown in FIG. 5, the apparatus includes:

a training sample acquiring module 501, configured to acquire a set of training samples corresponding to a current training period, wherein training samples in the set of training samples include feature items, feature attribute values corresponding to the feature items, and behavior data of a user for information items, wherein the feature items include features of the user and/or features of the information items; a behavior statistics data updating module 502, configured to acquire current behavior statistics data by performing statistical collection on the behavior data in the set of training samples, and acquire a second information prediction model by updating, based on the current behavior statistics data, first behavior statistics data in a first information prediction model, wherein the first information prediction model corresponds to a previous training period; and a model training module 503, configured to acquire a trained third information prediction model by training the second information prediction model based on the set of training samples.

In the apparatus for training information prediction models according to the embodiments of the present disclosure, the statistical collection may be periodically performed on the behavior data based on the set of training samples, and the behavior statistics data is added into the information prediction model corresponding to the previous training period. Then, the set of training samples is used to train and update the information prediction model corresponding to the previous training period, that is, the behavior statistics data is used in the process of training the model. Therefore, the parameters in the model may be trained more accurately, and the accuracy of the model may be improved. Furthermore, when the information needs to be predicted, the latest model may be acquired timely to predict the information, such that the accuracy and timeliness of predicting the information may be improved.

FIG. 6 is a block diagram of a structure of an apparatus for predicting information according to an embodiment of the present disclosure. The apparatus may be implemented by a software and/or a hardware, may be integrated in a computer device, and may be trained by the method for training information prediction models. As shown in FIG. 6, the apparatus includes:

a sample acquiring module 601, configured to acquire current samples corresponding to candidate information items; a model acquiring module 602, configured to acquire an information prediction model, wherein the information prediction model is acquired by the method for training information prediction models in the embodiments of the present disclosure; and a predicting module 603, configured to input the current samples into the information prediction model, and determine, based on an output result of the information prediction model, a prediction result corresponding to the candidate information items.

In the apparatus for predicting information, as the information prediction model is acquired by the method for training information prediction models according to the embodiments of the present disclosure, and the information is predicted based on the latest model, the recognition result may be acquired timely and accurately.

An embodiment of the present disclosure further provides a storage medium storing one or more computer-executable instructions. The one or more computer-executable instructions, when executed by a processor of a computer, cause the processor to perform the method for training information prediction models and/or the method for predicting information according to the embodiments of the present disclosure.

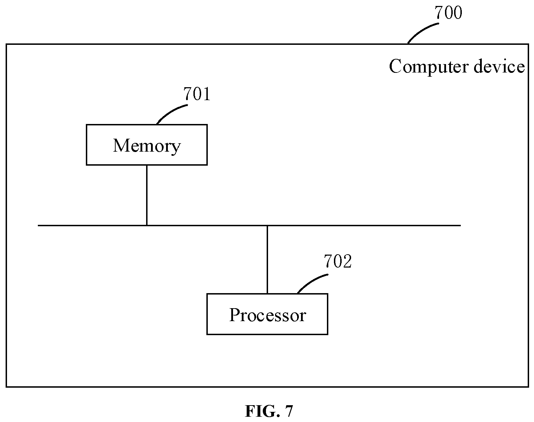

An embodiment of the present disclosure further provides a computer device. The apparatus for training models may be integrated in the computer device. FIG. 7 is a block diagram of a structure of a computer device according to an embodiment of the present disclosure. The computer device 700 includes a memory 701, a processor 702, and a computer program that is stored in the memory 701 and runnable in the processor 702; wherein the processor 702, when running the computer program, is caused to perform the method for training information prediction models and/or the method for predicting information according to the embodiments of the present disclosure.

## Claims

1. A method for training information prediction models, comprising:

   acquiring a set of training samples corresponding to a current training period, wherein training samples in the set of training samples comprise feature items, feature attribute values corresponding to the feature items, and behavior data of a user for information items, the feature items comprising at least one of features of the user and features of the information items;
   acquiring current behavior statistics data by performing statistical collection on the behavior data in the set of training samples, and acquiring a second information prediction model by updating, based on the current behavior statistics data, first behavior statistics data in a first information prediction model, wherein the first information prediction model corresponds to a previous training period; and
   acquiring a trained third information prediction model by training the second information prediction model based on the set of training samples.

2. The method according to claim 1, wherein acquiring the current behavior statistics data by performing the statistical collection on the behavior data in the set of training samples comprises:

   acquiring current behavior statistics amounts corresponding to the feature attribute values by performing statistical collection on the behavior data corresponding to the feature attribute values present in the set of training samples; and
   acquiring the current behavior statistics data by aggregating the current behavior statistics amounts corresponding to the feature attribute values.

3. The method according to claim 2, wherein performing the statistical collection on the behavior data corresponding to the feature attribute values present in the set of training samples comprises:
   acquiring first behavior statistics amounts in the first behavior statistics data corresponding to the feature attribute values present in the set of training samples, and superimposing the behavior data corresponding to the feature attribute values present in the set of training samples on the first behavior statistics amounts.

4. The method according to claim 3, wherein superimposing the behavior data corresponding to the feature attribute values present in the set of training samples on the first behavior statistics amounts comprises:

   calculating a product of the first behavior statistics amounts and a predetermined time decay factor; and
   superimposing the behavior data corresponding to the feature attribute values present in the set of training samples on the product.

5. The method according to claim 1, wherein

   the first information prediction model comprises an embedding layer and a fully connected layer, the fully connected layer receiving the embedding layer and the first behavior statistics data; and
   acquiring the trained third information prediction model by training the second information prediction model based on the set of training samples comprises:
   acquiring the trained third information prediction model by updating parameters of the embedding layer and the fully connected layer in the second information prediction model by means of training the second information prediction model based on the set of training samples.

6. The method according to claim 1, wherein upon acquiring the trained third information prediction model, the method further comprises:
   publishing the third information prediction model to a corresponding server.

7. The method according to any one of claims 1 to 6, wherein the feature attribute values are represented by hash values.

8. The method according to any one of claims 1 to 6, wherein the first information prediction model comprises an information prediction model based on deep neural networks DNN

9. The method according to any one of claims 1 to 6, wherein the first information prediction model comprises an information prediction model based on click through rates CTR.

**10.** A method for predicting information, comprising:

acquiring samples corresponding to candidate information items;
acquiring an information prediction model, wherein the information prediction model is acquired by the method for training information prediction models as defined in any one of claims 1 to 9; and
inputting the samples into the information prediction model, and determining, based on an output result of the information prediction model, a prediction result corresponding to the candidate information items.

**11.** The method according to claim 10, wherein

the information prediction model comprises an information prediction model based on click through rates CTR;
determining, based on the output result of the information prediction model, the prediction result corresponding to the candidate information items comprises:
determining, based on the output result of the information prediction model, a CTR prediction result corresponding to the candidate information items;
upon determining, based on the output result of the information prediction model, the prediction result corresponding to the candidate information items, the method further comprises:

determining an order of the candidate information items based on the CTR prediction result; and
determining, based on the order, an information item to be recommended in the candidate information items.

**12.** An apparatus for training information prediction models, comprising:

a training sample acquiring module, configured to acquire a set of training samples corresponding to a current training period, wherein training samples in the set of training samples comprise feature items, feature attribute values corresponding to the feature items, and behavior data of a user for information items, the feature items comprising at least one of features of the user and features of the information items;
a behavior statistics data updating module, configured to acquire current behavior statistics data by performing statistical collection on the behavior data in the set of training samples, and acquire a second information prediction model by updating, based on the current behavior statistics data, first behavior statistics data in a first information prediction model, wherein the first information prediction model corresponds to a previous training period; and
a model training module, configured to acquire a trained third information prediction model by training the second information prediction model based on the set of training samples.

**13.** An apparatus for predicting information, comprising:

a sample acquiring module, configured to acquire samples corresponding to candidate information items;
a model acquiring module, configured to acquire an information prediction model, wherein the information prediction model is acquired by the method for training information prediction models as defined in any one of claims 1 to 9; and
a predicting module, configured to input the samples into the information prediction model, and determine, based on an output result of the information prediction model, a prediction result corresponding to the candidate information items.

**14.** A computer-readable storage medium, storing a computer program, wherein the computer program, when run by a processor, causes the processor to perform the method as defined in any one of claims 1 to 11.

**15.** A computer device, comprising: a memory, a processor, and a computer program that is stored in the memory and runnable in the processor, wherein the processor, when running the computer program, is caused to perform the method as defined in any one of claims 1 to 11.

Acquiring a set of training samples corresponding to a current training period, wherein training samples in the set of training samples include feature items, feature attribute values corresponding to the feature items, and behavior data of a user for information items, wherein the feature items include features of the user and/or features of the information items

101

Acquiring current behavior statistics data by performing statistical collection on the behavior data in the set of training samples, and acquiring a second information prediction model by updating, based on the current behavior statistics data, first behavior statistics data in a first information prediction model, wherein the first information prediction model corresponds to a previous training period

102

Acquiring a trained third information prediction model by training the second information prediction model based on the set of training samples

103

**FIG. 1**

Acquiring a set of training samples corresponding to a current training period, wherein training samples in the set of training samples include feature items, feature attribute values corresponding to the feature items, behavior data of a user for information items, wherein the feature items include features of the user and/or features of the information items

201

Acquiring first behavior statistics amounts in the first behavior statistics data in the first information prediction model corresponding to current feature attribute values present in the set of training samples, calculating a product of the first behavior statistics amounts and a predetermined time decay factor, and superimposing the behavior data corresponding to the feature attribute values present in the set of training samples on the product, such that current behavior statistics amounts corresponding to the current feature attribute values are acquired

202

Acquiring the current behavior statistics data by aggregating the current behavior statistics amounts corresponding to the feature attribute values

203

Acquiring a trained third information prediction model by updating parameters of an embedding layer and a fully connected layer in a second information prediction model by means of training the second information prediction model based on the set of training samples

204

Publishing the third information prediction model to a corresponding server

205

**FIG. 2**

| Feature field 1 (field1) | Feature field 2 (field2) | ... | Feature field n (fieldn) |

| Embedding layer (Embedding) | Behavior statistics data (stats feature) |

CTR

**FIG. 3**

| | 401 |
| Acquiring current samples corresponding to candidate information items | |

| | 402 |
| Acquiring an information prediction model | |

| | 403 |
| Inputting the current samples into the information prediction model, and determining, based on an output result of the information prediction model, a prediction result corresponding to the candidate information items | |

**FIG. 4**

501

Training sample
acquiring module

502

Behavior statistics data
updating module

503

Model training module

**FIG. 5**

601

Sample acquiring
module

602

Model acquiring
module

603

Predicting module

**FIG. 6**

**FIG. 7**

## INTERNATIONAL SEARCH REPORT

| International application No. |
| --- |
| **PCT/CN2020/120580** |

**A.    CLASSIFICATION OF SUBJECT MATTER**

G06K 9/62(2006.01)i

According to International Patent Classification (IPC) or to both national classification and IPC

**B.    FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 预测, 模型, 训练, 样本, 特征, 更新, 用户, 行为, 周期, 集合, 统计, prediction, model, train, sample, character, feature, update, user, consumer, behavior, period, set, statistic

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 111126495 A (GUANGZHOU CITY PAGODA INFORMATION TECHNOLOGY CO., LTD.) 08 May 2020 (2020-05-08)<br>        claims 1-15 | 1-15 |
| X | CN 109871858 A (BEIJING JINGDONG SHANGKE INFORMATION TECHNOLOGY CO., LTD. et al.) 11 June 2019 (2019-06-11)<br>        claims 1-20, description, paragraphs [0078]-[0113], [0143]-[0158] | 1-15 |
| A | CN 110428298 A (ALIBABA GROUP HOLDING LIMITED) 08 November 2019 (2019-11-08)<br>        entire document | 1-15 |
| A | CN 109960761 A (TENCENT TECHNOLOGY SHENZHEN CO., LTD.) 02 July 2019 (2019-07-02)<br>        entire document | 1-15 |
| A | CN 109460513 A (BEIJING BYTEDANCE NETWORK TECHNOLOGY CO., LTD.) 12 March 2019 (2019-03-12)<br>        entire document | 1-15 |
| A | US 2017337326 A1 (BAIDU USA LLC.) 23 November 2017 (2017-11-23)<br>        entire document | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 December 2020** | **13 January 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/120580**

| Patent document cited in search report | | | Publication date (day/month/year) | Patent family member(s) | | | Publication date (day/month/year) |
|---|---|---|---|---|---|---|---|
| CN | 111126495 | A | 08 May 2020 | None | | | |
| CN | 109871858 | A | 11 June 2019 | None | | | |
| CN | 110428298 | A | 08 November 2019 | None | | | |
| CN | 109960761 | A | 02 July 2019 | None | | | |
| CN | 109460513 | A | 12 March 2019 | None | | | |
| US | 2017337326 | A1 | 23 November 2017 | CN | 107423535 | A | 01 December 2017 |

Form PCT/ISA/210 (patent family annex) (January 2015)

**EP 4 083 857 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911360658